## Europäisches Patentamt
## European Patent Office
## Office européen des brevets

(19)

(11) Publication number: **0 003 406**
**B1**

(12) **EUROPEAN PATENT SPECIFICATION**

(45) Date of publication of patent specification: **26.05.82**

(51) Int. Cl.³: **C 08 F 299/04**

(21) Application number: **79300075.3**

(22) Date of filing: **17.01.79**

(54) **Polyester resin blend.**

(30) Priority: **19.01.78 US 870780**

(43) Date of publication of application:
**08.08.79 Bulletin 79/16**

(45) Publication of the grant of the patent:
**26.05.82 Bulletin 82/21**

(84) Designated Contracting States:
**BE DE FR GB IT NL**

(56) References cited:

(73) Proprietor: **MOBIL OIL CORPORATION**
**150 East 42nd Street**
**New York New York 10017 (US)**

(72) Inventor: **Murray, James Gordon**
**9 Lycoming Lane**
**East Brunswick New Jersey 08816 (US)**

(74) Representative: **Jones, Alan John et al,**
**CARPMAELS & RANSFORD 43 Bloomsbury**
**Square**
**London, WC1A 2RA (GB)**

Courier Press, Leamington Spa, England.

# 0 003 406

## Polyester resin blend

This invention relates to polyester resin blends.

Moulding compositions comprising polyesters and styrene are known. The polyesters are generally unsaturated polyesters derived from polyols and polycarboxylic acids, generally from glycols and unsaturated dibasic acids such as maleic anhydride or fumaric acid either alone or with saturated acids such as phthalic anhydride, adipic acid or isophthalic acid. The glycols used are generally ethylene glycol, propylene glycol, diethylene glycol or dipropylene glycol. The polyesters are generally dissolved in the styrene monomer to form a liquid moulding composition. The amount of styrene monomer is generally 1.5 to 2.0 moles per mole of dibasic acid. When the blend is polymerized with the aid of a catalyst—usually an organic peroxide—the composition cures to form a highly cross-linked three-dimensional network. The final cross-linked polymer may be relatively rigid or flexible, depending upon the nature of the polyester: polyesters based on phthalic anhydride or adipic acid are less reactive and tend to produce products which are less highly cross-linked and therefore less rigid. Use of ether glycols such as diethylene glycol or dipropylene glycol also tends to reduce the rigidity.

As an alternative to styrene itself, vinyl toluene may be used as the cross-linking comonomer. Vinyl toluene is a mixture which consists mainly of meta- and para-methyl styrenes (vinyl toluenes) produced by the catalytic dehydrogenation of a mixture of the corresponding m- and p-ethyltoluenes. The ethyltoluene mixture is itself obtained by the fractional distillation of a mixture of the o-, m- and p-ethyltoluenes. The weight ratio of the m- and p-isomers in the monomer mixture is approximately 65:35 (m:p). A convenient summary of the preparation and properties of the monomer mixture and of polymers produced from it is given in "Styrene: Its Polymers, Copolymers and Derivatives" Ed. R. H. Boundy, R. F. Boyer, ACS Monograph Series, 1952, Hafner Publishing Company, pages 1232 to 1245.

We have now found that polymers with advantageous properties can be prepared from a mixture of isomeric methyl ethenyl benzenes having a particular isomeric distribution.

The polymerizable isomeric mixture consists essentially of the m- and p-isomers of methyl ethenyl benzene. The mixture is substantially devoid of the o-isomer; when the o-isomer is present, the amount of it is no more than 0.1% based on the total weight of the isomer mixture.

The ratio by weight of the isomers in the mixture is as follows:

| Isomer | Wt. percent |
|---|---|
| 1-methyl-2-ethenyl benzene | Not more than 0.1, preferably not more than 0.05. |
| 1-methyl-3-ethenyl benzene | Not more than 10, preferably 1 to 5. |
| 1-methyl-4-ethenyl benzene | At least 90. |

Generally, the proportion of the p-isomer (1-methyl-4-ethenyl benzene) will be at least 95 weight percent with the m-isomer (1-methyl-3-ethenyl benzene) constituting not more than 5 weight percent of the mixture. Particularly preferred mixtures contain 97 to 99 weight percent of the p-isomer and 1 to 3 weight percent of the m-isomer.

The isomer mixture may contain impurities and adventitious materials in addition to the methyl ethenyl benzenes. Generally, these other materials will not constitute more than 1 percent by weight of the total mixture. These other materials derive essentially from the process used to make the methyl ethenyl benzenes.

A typical isomer mixture has the following analysis, by weight, determined by gas chromatography:

|  |  | . Wt. percent |
|---|---|---|
| Total vinyl benzenes |  | 99.41 |
| Residue: |  |  |
| Ethyl toluene | 0.10 |  |
| Mesitylenes etc. | 0.15 |  |
| Non-vinylic higher boilers | 0.34 |  |
|  | 0.59 |  |
|  |  | 0.59 |
|  |  | 100.00 |
| Vinyl benzenes: |  |  |
| 1-methyl-2-ethenyl benzene |  | 0.05 |
| 1-methyl-3-ethenyl benzene |  | 2.6 |
| 1-methyl-4-ethenyl benzene |  | 97.4 |

2

**0 003 406**

The mixture of the isomeric methyl ethenyl benzenes may be obtained by the catalytic dehydrogenation of a mixture of the corresponding ethyl toluenes, which in turn may be obtained by the selective alkylation process disclosed in British Patent Specification No. 1,536,828.

The precursor, ethyl toluene, is made by the alkylation of toluene with ethylene in the presence of certain crystalline aluminosilicate zeolite catalysts. The catalyst has a silica to alumina weight ratio of at least 12 and a constraint index within the range of 1 to 12. The process produces an extremely high proportion of the 1-methyl-4-ethyl benzene isomer, with only a minor proportion of the 1-methyl-3-ethyl benzene isomer and negligible amounts of the 1-methyl-2-ethyl benzene isomer. The almost complete absence of the 1-methyl-2-ethyl isomer is highly advantageous because this isomer tends to produce undesired by-products during the dehydrogenation step (indanes and indenes which adversely affect the properties of the resultant polymers and which cannot be easily separated from the methyl ethenyl benzenes).

The mixture of isomeric ethyl toluenes may be subjected to distillation prior to the hydrogenation step in order to separate out various by-products and after the hydrogenation has been completed, a further distillation may be carried out to separate the methyl ethenyl benzenes from their saturated precursors.

When mixed with polyesters the monomer mixture produces a resin mix of lower viscosity than vinyltoluene (when used at the same concentration). The cure reaction, on the other hand, is less exothermic than that of vinyl toluene being more comparable to that of styrene. At the same time, however, the mixture has a higher boiling point and lower vapor pressure than styrene. It therefore has the advantages both of styrene (slower polymerization rate, less exotherm) and of vinyl toluene (higher boiling point, lower vapor pressure).

The polyesters are generally of the liquid or semi-liquid molding, lay-up or spray-up types. Generally they will be solid or semi-solid materials which can be dissolved readily in the monomer mixture on heating. The polyesters are of the conventional types, i.e. they are normally derived from polyhydric alcohols such as ethylene glycol, propylene glycol, butane-1,4-diol or alkylene oxides such as ethylene oxide or propylene oxide. Since linear materials are desired, the alcohol will normally be dihydric. The acids used to make the polyesters are generally dicarboxylic acids such as maleic acid, isophthalic acid, terephthalic acid, and their anhydrides e.g. phthalic anhydride. Halogenated derivatives such as tetrabromo phthalic anhydride will yield self-extinguishing (non-flammable) materials. The relative amounts of the mixture and the polyester will normally be in the range of 10 to 50 percent mixture, preferably 30 to 40 of the mixture, by weight. Cure conditions and catalysts for the resin blends will be comparable to those for polyester/styrene blends. Thus, peroxide catalysts will normally be used, optionally with an amine or metallic ion co-catalyst such as N,N-dimethyl-aniline or cobalt octoate. Benzoyl peroxide is a convenient peroxy curing catalyst. Other suitable catalysts will be apparent to those skilled in the art.

The polyester blends will be useful for bulk molding, sheet molding, lay-up, spray up, filament winding and other techniques familiar to those in the art. In the following Examples, percentages are by weight.

Example 1

The mixture of methyl ethenyl benzene isomers (MEB) used had the following composition (weight percent):

| | |
|---|---|
| Methyl ethenyl benzenes | 99.43 |
| Ethyltoluene | 0.53 |
| Xylenes, cumenes, mesitylenes | 0.01 |
| High boiling materials | 0.03 |
| Methyl ethenyl benzenes: | |
| 1-methyl-2-ethenyl benzene | —(1) |
| 1-methyl-3-ethenyl benzene | 3.0 |
| 1-methyl-4-ethenyl benzene | 97.0 |

Note: (1) Less than 0.05%.

Samples of four different commercially available polyester resins were distilled to remove any styrene monomer present using a low enough temperature to prevent polymerization. Distillation was carried out on a steam bath using a rotary evaporator at a pressure of 1 mm. Hg. or less. Heating was continued until the samples attained a constant weight. When the resins were then reconstituted to their original styrene monomer concentration, the measurement of a viscosity close to the original viscosity confirmed that there had not been condensation or cure reactions occurring during the removal of the monomer.

The polyester resins used were as shown in Table 1 below:

3

Table 1
Polyester resins evaluated

| Producer | Designation | Polyester type |
|---|---|---|
| Grace | GR 941 base resin | General purpose low viscosity, non promoted |
| Grace | GR 665 base resin | Flexible resin |
| Reichold | 33—031 | Rigid, low viscosity, low reactivity thixotropic promoter |
| Koppers | 1000—25 | General purpose, low reactivity, medium viscosity |
| Koppers | 6000—25 | Isophthalic resin, high reactivity |

The polyester resins were formulated with styrene, vinyl toluene (VT-approximately 60% m-methylstyrene 40% p-methylstyrene), and said monomer mixture (MEB). The mixtures were compatible in all cases.

The viscosities of the mixes are as shown in Table 2 below:

Table 2

| Polyester Resin | Monomer Type | % Conc. | Viscosity 30°C Cp.×Density |
|---|---|---|---|
| GR 665 | Styrene | 38.5 | 327 |
| GR 665 | MEB | 38.7 | 420 |
| GR 665 | VT | 37.8 | 453 |
| GR 941 | Styrene | 40.0 | 243 |
| GR 941 | MEB | 40.0 | 418 |
| GR 941 | VT | 40.0 | 400 |
| GR 511 | Styrene | 40.0 | 124 |
| GR 511 | MEB | 40.0 | 149 |
| GR 511 | VT | 40.0 | 154 |
| Koppers 1000—25 | Styrene | 26.5 | 1450 |
| Koppers 1000—25 | Styrene | 40.0 | 162 |
| Koppers 1000—25 | MEB | 26.5 | 3390 |
| Koppers 1000—25 | MEB | 40.0 | 215 |
| Koppers 1000—25 | VT | 26.5 | 3640 |
| Koppers 1000—25 | VT | 40.0 | 293 |
| Koppers 6000—25 | Styrene | 31.2 | 2570 |
| Koppers 6000—25 | Styrene | 40.0 | 485 |
| Koppers 6000—25 | MEB | 31.2 | 3650 |
| Koppers 6000—25 | MEB | 40.0 | 680 |
| Koppers 6000—25 | VT | 31.2 | 4620 |
| Koppers 6000—25 | VT | 40.0 | 745 |
| Reichold 33—031 | Styrene | 40.0 | 145 |
| Reichold 33—031 | MEB | 40.0 | 212 |
| Reichold 33—031 | VT | 40.0 | 227 |

The results in Table 2 show that the mixes with the MEB according to the present invention generally have a lower viscosity (at the same concentration) than the mixes with vinyl toluene. This facilitates handling and use of the mixes.

Samples of two resin systems containing styrene, vonyl-toluene, and MEB were then cured as thin films under identical conditions and the modulus properties of these films measured as a function of temperature using the Rheovibron thermomechanical analyzer.

The resins were prepared and cured in the following manner:

Samples of resin containing 40% of styrene and equal weights and equal molar amounts (40% and 43%) of vinyltoluene and MEB. These samples were then treated with 4% Lupersol 224 (4% active oxygen) and 0.5% of a 3% solution of cobalt octoate and press cured as a thin film at 60°C for 30 minutes followed by an oven post cure at 110°C for an additional 30 minutes.

Samples were then cut from these films for Rheovibron analysis. Modulus temperature characteristics of these films were measured from 25°C to 130°C and the glass transition temperature obtained from the maximum in the loss modulus cure. The modulus values at 25°C and 100°C and the observed glass transition temperature are listed in Table 3. Surprisingly, it can be seen that the values of glass transition and 100°C modulus for the MEB mixes are similar to those obtained for styrene while the values obtained for vinyltoluene are considerably different with glass transition temperatures being lower in one resin and higher in the other.

Table 3
Table 3A—GR 665 Polyester

| Monomer % | | Modulus (dynes/cm$^2$×10$^{-9}$) | | Tg°C |
|---|---|---|---|---|
| | | 25°C | 100°C | |
| Styrene | 40 | 27.5 | 2.6 | 81 |
| Vinyltoluene | 40 | 32.3 | 13.5 | 102 |
| MEB | 40 | 29.4 | 3.4 | 79 |

Table 3B—GR 941 Polyester

| | | | | |
|---|---|---|---|---|
| Styrene | 40 | 25 | 16.7 | 120 |
| Vinyltoluene | 43 | 24 | 10.6 | 107 |
| MEB | 43 | 27.3 | 11.7 | 116 |
| MEB | 40 | 26.8 | 14.4 | 118 |

Example 2

Samples of four of the above polyester resins (distilled to remove styrene) were mixed with styrene, vinyl toluene (meta:para weight ratio about 65:35) and para-methyl styrene (PMS—97% by weight para methyl styrene about 3% by weight meta methyl styrene and, less than 0.1% by weight ortho methyl styrene) to form molding compositions with a catalyst system comprising 1.25% Lupersol 224 (trademark—3,5-dimethyl-3,5-5-dihydroxy-1,2-peroxycyclopentane, 4% active oxygen) and 0.2% of 3% cobalt octoate solution. The compositions were cast into silicone rubber tensile bar molds and cured overnight at room temperature followed by 30 minutes post-cure at 110°C. The tensile properties of the cured compositions were then evaluated; the results are given in Table 4 below. The amount of the monomer was 40% unless otherwise indicated.

Table 4
Tensile properties of cast polyester resins

| Resin | Monomer | Tensile Break psi (kPa) | Tangent Modulus psi (kPa) |
|---|---|---|---|
| GR 665 | Styrene | 1310 (9032) | 235,000 (1.62×10$^6$) |
| GR 665 | PMS | 1280 (8825) | 256,000 (1.765×10$^6$) |
| GR 665 | Vinyltoluene | 1510 (10,441) | 247,000 (1.703×10$^6$) |
| GR 665 | Styrene* | 1600 (11,032) | 307,000 (2.117×10$^6$) |
| GR 665 | PMS* | 1940 (13,376) | 265,000 (1.827×10$^6$) |
| GR 665 | Vinyltoluene* | 1390 (9584) | 306,000 (2.11×10$^6$) |
| GR 941 | Styrene | 1390 (9584) | 306,000 (2.11×10$^6$) |
| GR 941 | PMS | 1640 (11,307) | 361,000 (2.489×10$^6$) |
| GR 941 | Vinyltoluene | 1580 (10,894) | 370,000 (2.551×10$^6$) |
| 1000—25 | Styrene (26.5%) | 700 (4826) | 258,000 (1.779×10$^6$) |
| 1000—25 | PMS (26.5%) | 890 (6136) | 252,000 (1.737×10$^6$) |
| 1000—25 | Vinyltoluene (26.5%) | 1130 (7791) | 263,000 (1.813×10$^6$) |
| 1000—25 | Styrene | 1200 (8274) | 284,000 (1.958×10$^6$) |
| 1000—25 | PMS | 2300 (15,858) | 261,000 (1.8×10$^6$) |
| 1000—25 | Vinyltoluene | 1070 (7377) | 249,000 (1.717×10$^6$) |
| 6000—25 | Styrene (31.2%) | 1440 (9928) | 242,000 (1.669×10$^6$) |
| 6000—25 | PMS (31.2%) | 2900 (19,995) | 264,000 (1.82×10$^6$) |
| 6000—25 | Vinyltoluene (31.2%) | 2080 (14,341) | 257,000 (1.772×10$^6$) |
| 6000—25 | Styrene | 1970 (13,583) | 263,000 (1.813×10$^6$) |
| 6000—25 | PMS | 2650 (18,271) | 235,000 (1.62×10$^6$) |
| 6000—25 | Vinyltoluene | 2200 (15,168) | 243,000 (1.675×10$^6$) |

Note: *Polyester/monomer mixture prepared and stored prior to pouring.

The data in Table 4 show that the moulding compositions of the present invention generally possess a better combination of properties than similar compositions containing styrene or vinyl toluene.

Our copending Application No. 79300076.1 (0003639) describes and claims a polymer produced by the polymerization of a polymerizable mixture of isomers of methyl ethenyl benzene consisting essentially of not more than 10% by weight of 1-methyl-3-ethenyl benzene, at least 90% by weight of 1-methyl-4-ethenyl benzene, and 0 to 0.1% by weight of 1-methyl-2-ethenyl benzene.

## Claims

1. A resin composition which comprises a blend of an unsaturated polyester resin and a mixture of isomers of methyl ethenyl benzene as a styrenic cross-linking monomer, characterized in that the cross-linking monomer comprises a polymerizable mixture of isomers of methyl ethenyl benzene consisting essentially of, based on the weight of the mixture, not more than 10 percent by weight of 1-methyl-3-ethenyl benzene, at least 90 percent by weight of 1-methyl-4-ethenyl benzene, and 0 to 0.1 percent by weight of 1-methyl-2-ethenyl benzene.

2. The composition of claim 1 in which the isomers are present in the mixture in the following proportions by weight:
1-methyl-2-ethenyl benzene 0 to 0.05%.
1-methyl-3-ethenyl benzene 1 to 5%.
1-methyl-4-ethenyl benzene at least 95%.

3. The composition of claim 2 in which the isomers are present in the mixture in the following proportions by weight:
1-methyl-2-ethenyl benzene 0 to 0.05%.
1-methyl-3-ethenyl benzene 1 to 3%.
1-methyl-4-ethenyl benzene at least 97%.

## Revendications

1. Une composition de résine comprenant un mélange d'une résine de polyester insaturée et un mélange d'isomères de méthyl éthénylbenzène en tant que monomère styréné réticulant, caractérisée, en ce que le monomère réticulant comprend un mélange polymérisable d'isomères de méthyléthénylbenzène composé essentiellement, par rapport au poids du mélange, de pas plus de 10% en poids de 1-méthyl-3-éthénylbenzène, d'au moins 90% en poids de 1-méthyl-4-éthénylbenzène et de 0 à 0,1% en poids de 1-méthyl-2-éthénylbenzène.

2. Composition selon la revendication 1, caractérisée en ce que les isomères sont présents dans le mélange dans les proportions pondérales suivantes:
1-méthyl-2-éthénylbenzène: 0 à 0,05%
1-méthyl-4-éthénylbenzène: 1 à 5%
1-méthyl-4-éthénylbenzène, au moins 95%

3. Composition selon la revendication 2, caractérisée en ce que les isomères sont présents dans le mélange dans les proportions pondérales suivantes:
1-méthyl-2-éthénylbenzène, 0 à 0,05%
1-méthyl-3-éthénylbenzène, 1 à 3%
1-méthyl-4-éthénylbenzène, au moins 97%.

## Patentansprüche

1. Harzgemisch, das aus einer Mischung von einem ungesättigten Polyesterharz und einem Gemisch von Isomeren von Methyläthenylbenzol als Styrol-Quervernetzungsmonomerem besteht, dadurch gekennzeichnet, daß das Quervernetzungsmonomere ein polymerisierbares Gemisch von Isomeren von Methyläthenylbenzol umfaßt, bestehend im wesentlichen aus (bezogen auf das Gewicht des Gemisches) von nicht mehr als 10 Gew.-% 1-Methyl-3-äthenylbenzol, wenigstens 90 Gew.-% 1-Methyl-4-äthenylbenzol und 0 bis 0,1 Gew.-% 1-Methyl-2-äthenylbenzol.

2. Gemisch nach Anspruch 1, dadurch gekennzeichnet, daß die Isomeren in dem Gemisch in den folgenden Gewichtsanteilen vorhanden sind:
1-Methyl-2-äthenylbenzol: 0 bis 0,05%
1-Methyl-3-äthenylbenzol: 1 bis 5%
1-Methyl-4-äthenylbenzol: wenigstens 95%.

3. Gemisch nach Anspruch 2, dadurch gekennzeichnet, daß die Isomeren in dem Gemisch in den folgenden Gewichtsanteilen vorhanden sind:
1-Methyl-2-äthenylbenzol: 0 bis 0,05%
1-Methyl-3-äthenylbenzol: 1 bis 3%
1-Methyl-4-äthenylbenzol: wenigstens 97%.